# EUROPÄISCHE PATENTSCHRIFT

(11) **EP 1 382 210 B1**
(45) Veröffentlichungstag und Bekanntmachung des Hinweises auf die Patenterteilung: **30.04.2008**
(21) Anmeldenummer: 02759756.6
(22) Anmeldetag: 09.04.2002
(51) Int. Cl.: H04Q 7/00

(54) **VERFAHREN ZUR PAKETORIENTIERTEN ÜBERTRAGUNG VON DATEN IN EINEM KOMMUNIKATIONSSYSTEM**
METHOD OF PACKET-ORIENTED TRANSMISSION OF DATA IN A COMMUNICATION SYSTEM
PROCEDE DE TRANSMISSION DE DONNEES ORIENTEE PAQUETS DANS UN SYSTEME DE COMMUNICATION

(30) Priorität: 09.04.2001 DE 10117695
(43) Veröffentlichungstag der Anmeldung: 21.01.2004
(73) Patentinhaber: Nokia Siemens Networks GmbH & Co. KG, 81541 München (DE)
(72) Erfinder: GESSNER, Christina, 81379 München (DE); MEILING, Axel, 13597 Berlin (DE); SCHNIEDENHARN, Jörg, 13587 Berlin (DE); RAJI, Fariba, A-01200 Wien (AT); STADLER, Thomas, A-1130 Wien (AT)
(86) Internationale Anmeldenummer: PCT/DE2002/001313
(87) Internationale Veröffentlichungsnummer: WO 2002/082828

(56) Entgegenhaltungen:
- WO-A-99/09698
- US-A- 5 940 769
- "3rd Generation Partnership Project (3GPP); Technical Specification Group Radio Access Network; UTRA High Speed Downlink Packet Access; Release 4; TR 25.950 V 4.0.0" 3GPP, März 2001 (2001-03), Seiten 1-27, XP002213178

## Beschreibung

Die Erfindung betrifft ein Verfahren zur paketorientierten Übertragung von Daten in einem Kommunikationssystem, insbesondere einem Funk-Kommunikationssystem bzw. Mobilfunksystem unter Verwendung eines reinen oder hybriden ARQ-Datensicherungsverfahrens für eine Prüfung auf Übertragungsfehler und wiederholtes Anfordern fehlerhaft und/oder ausbleibender Datenpakete.

In einem Funk-Kommunikationssystem werden Daten mittels elektromagnetischer Wellen übertragen. Das Abstrahlen der elektromagnetischen Wellen erfolgt dabei mit Trägerfrequenzen, die in dem für das jeweilige System vorgesehenen Frequenzband liegen. Über die Funkschnittstelle werden Verbindungen zwischen ortsfesten Basisstationen und Teilnehmerstationen, die ortsfeste oder mobile Funkgeräte sein können, aufgebaut und ausgelöst.

Um den Bedarf des zur Verfügung stehenden Spektrums an Trägerfrequenzen besser abzudecken, wurden synchrone Multiplexverfahren z. B. auf der Basis eines frequenz-, zeit-, raum- und/oder codeselektiven Vielfachzugriffs zwecks Verteilung der Übertragungskapazität eines physikalischen Kanals auf mehrere Verbindungen eingeführt. Wenn im weiteren der Begriff "physikalischer Kanal" oder "Kanal" gebraucht wird, so wird er identisch zu dem Begriff "Ressource" verwendet, die gegebenenfalls auch über mehrere physikalische Kanäle, jeweils eine bestimmte Bitübertragungsrate auf der Luftschnittstelle zur Verfügung stellt.

Nachteilig am synchronen Multiplexverfahren ist, daß die für eine Verbindung in Anspruch genommene Übertragungskapazität infolge der Zeitsynchronisierung für einen längeren Zeitraum fest gebunden ist und auch dann, wenn aktuell keine Übertragungskapazität benötigt wird, diese nicht für andere Teilnehmer freigegeben werden kann. Damit bleibt Übertragungskapazität unter Umständen ungenutzt.

Diesen Mangel verbessert ein weiteres grundsätzliches, auf paketorientierter Übertragung basierendes Verfahren, die Paketvermittlung. Die Paketvermittlung beruht ebenfalls auf der gemeinsamen Nutzung eines physikalischen Kanals durch mehrere Verbindungen. Auch hierfür erfolgt eine Unterteilung auf der Zeitachse, allerdings nicht, wie beim synchronen Multiplexverfahren, vordergründig in feste Zeitschlitze, sondern in adressierte Datenpakete variabler Länge. Die Daten werden zeitvariant übertragen, weshalb man auch von einem asynchronen Multiplexverfahren spricht. Ein Datenpaket wird auch als (Daten-)Block, (Daten-)Rahmen, Frame oder (Daten-)Wort bezeichnet.

Jeder Teilnehmer des Funk-Kommunikationssystems kann jederzeit auf die bis dahin ungenutzte Übertragungskapazität zugreifen und seine Datenpakete z.B. nach dem stochastischen Zugriffsverfahren ALOHA übertragen. Außerdem läßt sich die Bitübertragungsrate einer Verbindung sehr leicht stufenlos variieren. Eine Teilnehmerstation kann die Bitübertragungsrate sowohl durch die zeitlichen Abstände, in welchen die Datenpakete gesendet werden, als auch durch deren Länge, beeinflussen. Zukünftige Funk-Kommunikationssysteme, wie beispielsweise das UMTS (Universal Mobile Telecommunications System), werden den Teilnehmern eine Vielzahl unterschiedlicher Dienste mit unterschiedlichen Bitübertragungsraten anbieten. Neben der reinen Sprachübertragung werden Multimedia-Anwendungen mit der einhergehenden Dienstevielfalt, wie Internet, Voice over IP (Internet-Telefonie), E-mail, SMS (Short Message Service = Kurznachrichtendienst von Punkt zu Punkt) und weitere einen großen Teil am Datenaufkommen ausmachen. Die Einbindung der paketorientierten Übertragung ist hier besonders vielversprechend.

Die Luftschnittstelle ist eine der ungünstigsten Kommunikationsmedien, die in der Nachrichtentechnik vorkommen. Ein Problem sind kurzfristige Empfangspegeleinbrüche und Signalverzerrungen, die im Falle der Übertragung der o. g. Datenstrukturen zum Verlust von Daten führen können. Gestörte Datenpakete werden im allgemeinen nicht von der Empfangsstation korrigiert und dann akzeptiert, sondern mittels eines fehlererkennenden Codes, eventuell zusätzlich zur Korrektur, auf Fehler überprüft. Wird ein Datenpaket als fehlerhaft erkannt, so wird es bei der Sendestation erneut angefordert. Hierzu wird im allgemeinen ein zu übertragendes Datenpaket mit Quittung (Ackknowledgement) bestätigt. Für ein fehlerfrei empfangenes Datenpaket wird eine positive Quittung (ACK = Acknowledge) an die Sendestation übertragen. Sofern das empfangene Datenpaket fehlerhaft ist, wird eine negative Quittung (NAK = Negative Acknowledge) an die Sendestation übertragen und seine erneute Übertragung angefordert. Die Sendestation muß deshalb eine Kopie des übertragenen Datenpaketes solange verwalten, bis es als fehlerfrei empfangen rückgemeldet worden ist. Dieses als ARQ-Verfahren (ARQ = Automatic Repeat Request) bekannte Fehlerbehandlungsverfahren setzt allerdings einen Rückkanal zwischen der Sendestation und der Empfangsstation voraus, über den die Ergebnisse der Fehlerauswertung durch die entsprechende Quittung von der Empfangsstation an die Sendestation mitgeteilt werden. Auf diesem Rückkanal werden auch die vorgenannten Daten zur Messung der Kanalqualität, wie Übertragungsrate, Empfangsleistung, Sendeleistung und/oder Interferenzen übertragen, womit zusätzliche Übertragungskapazität und Rechenleistung während einer Verbindung gebunden wird. In der Praxis wird das ARQ-Datensicherungsverfahren auch mit einer Fehlervorwärtskorrektur (FEC = Forward Error Correction) kombiniert und dann als hybrides ARQ-Verfahren bezeichnet. Da bei Verwendung von ACKs/NAKs als Quittungen die eindeutige Zuordnung zu einem Datenpaket nicht immer gewährleistet werden kann, verwendet man auch die Nummer des jeweils nächsten erwarteten Paketes (Request Number = RN) und ihre Wiederholungsanforderung (Request = RQ) als Quittung. Abhängig von der ARQ-Signalisierung kann eine RN als positive oder negative Quittung verwendet sein und ein RQ als negative Quittung.

Einen Überblick über ARQ-Signalisierung geben z.B. M. Bossert, M. Breitbach: Digitale Netze, B.G. Teubner Stuttgart·Lepzig 1999, S. 141-162.

Ein bekanntes hybrides ARQ-Verfahren ist das sogenannte N-Kanal Stop and Wait HARQ (N-Kanal SAW HARQ). Dieses Verfahren bedient sich N überlagerter einfacher Stop and Wait HARQ-Instanzen. So wird beispielsweise das sogenannte 2-Kanal Stop and Wait HARQ in der Weise realisiert, daß während des Empfangs von Datenblöcken eines zweiten Kanals die empfangenen Datenblöcke des ersten Kanals bestätigt werden, bzw. daß während des Empfangs von Datenblöcken des ersten Kanals der Empfang der Datenblöcke des zweiten Kanals bestätigt werden. Dies ermöglicht die Übertragung von Datenblöcken an den Empfänger, während dieser prüft, ob die zuvor gesendeten Datenblöcke fehlerhaft empfangen wurden und somit erneut zu übertragen sind. Vorteilhaft können durch diese Realisierung Verzögerungszeiten bei der Empfangsbestätigung verringert werden.

In gleicher Weise sind N-Kanal SAW HARQ-Verfahren mit beispielsweise N=4,6... denkbar, die maßgeblich abhängig von Speicherbedarf sowie Rechenleistung in den Basisstationen bzw. Teilnehmerendgeräten gewählt wird. Diesen Verfahren gemeinsam ist jedoch eine sofortige Bestätigung des erfolgreichen oder nicht erfolgreichen Empfangs eines Datenblocks, wodurch Signalisierungslast insbesondere bei einem breitbandigen Paketdatenkanal für eine Vielzahl von parallelen Verbindungen nachteilig erhöht wird.

Aus dem Standardisierungsdokument 3GPP TR 25.950 V4.0.0 (2001-03) ist insbesondere aus Kapitel 8.1.2 bekannt, daß jeder Teilnehmerstation jeweils ein sogenannter Uplink-Feedback-Kanal zugeordnet wird.

Aus US-A-5 940 769, insbesondere der Figur 10 und der Beschreibung in Spalte 10, Zeilen 39-44 ist bekannt, daß von einer empfangenden Station Antworten zu mehreren empfangenen Datenpaketen in einer Anforderung zu der sendenden Station übertragen werden.

In der WO-A-99 09698 ist insbesondere der Figur 2 entnehmbar, daß von einer Zielstation mehrere Datenblöcke innerhalb eines durch den Round Trip Delay definierten Zeitintervalls zu der Quellstation gesendet werden.

Aufgabe der Erfindung ist es, bei einer beschriebenen Verwendung eines SAW ARQ-Verfahrens eine Anzahl erforderlicher Rückkanäle zur Signalisierung der Empfangsbestätigung zu reduzieren.

Die Aufgabe wird durch ein Verfahren nach den Merkmalen des Patentanspruchs 1 gelöst. Ein Kommunikationssystem zur Durchführung des Verfahrens ist in Patentanspruch 6 angegeben. Vorteilhafte Weiterbildungen sind in den abhängigen Patentansprüchen angegeben.

Erfindungsgemäß wird von einer empfangenden Funkstation der Empfang von zumindest zwei Datenblöcken innerhalb eines Zeitrahmens eines von mehreren Funkstationen zeitlich getrennt genutzten Rückkanals gemeinsam bestätigt, wodurch Funkresourcen effizienter genutzt werden.

Anhand eines Ausführungsbeispiels wird die Erfindung nachfolgend erläutert.

Dabei zeigen
- FIG 1: ein Blockschaltbild eines Funk-Kommunikationssystems, insbesondere eines bekannten GSM-Mobilfunksystems,
- FIG 2: ein Ablaufdiagramm des N-Kanal SAW ARQ-Verfahrens nach dem Stand der Technik,
- FIG 3: ein Ablaufdiagramm des erfindungsgemäßen N-Kanal SAW ARQ-Verfahrens, und
- FIG 4: ein Ablaufdiagramm eines weiteren erfindungsgemäßen N-Kanal SAW ARQ-Verfahrens.

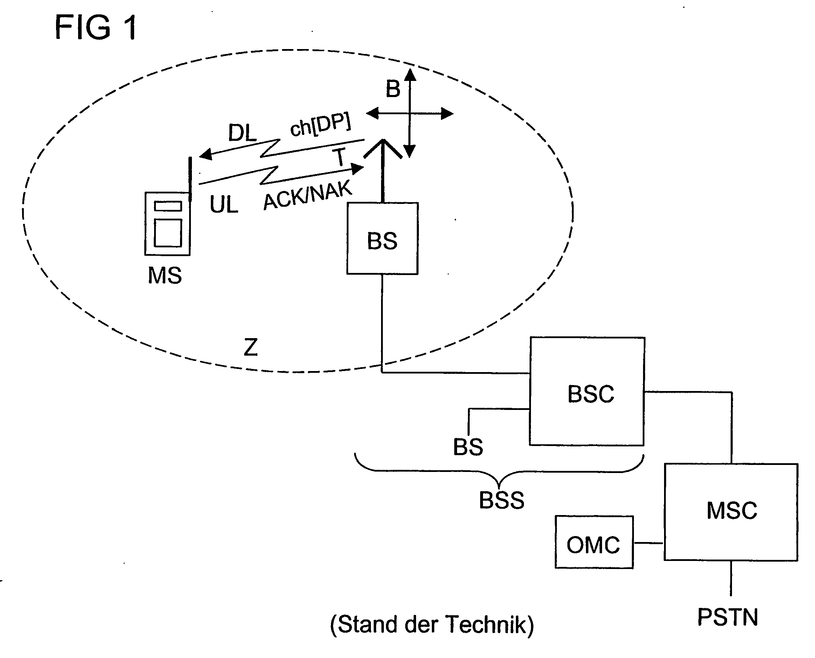

Die FIG 1 zeigt ein Blockschaltbild eines Funk-Kommunikationssystems, speziell eines bekannten GSM-Mobilfunksystems. Diese Struktur läßt sich jedoch in einfacher Weise auf andere Systeme, wie beispielsweise das UMTS-Mobilfunksystem, übertragen, in dem die Erfindung ebenfalls verwirklicht werden kann.

Das GSM-Mobilfunksystem besteht aus einer Vielzahl von Mobilvermittlungsstellen MSC (Mobile Switching Center), die einen Übergang zu einem leitungsgebundenen Festnetz PSTN ermöglichen. Jede Mobilvermittlungsstelle MSC ist mit einer Vielzahl von Basisstations-Steuerungen BSC (Base Station Controller) verbunden, die jeweils eine zentrale Verwaltung von Funkressourcen für ein oder mehrere Basisstationen (Base Station) durchführen. Die Basisstationen BS ermöglichen wiederum eine Verbindung zu einer Vielzahl von Teilnehmerstationen MS über eine Funkschnittstelle entsprechend einem spezifischen Teilnehmerseparierungsverfahren. Dabei wird nach einer Übertragung in Aufwärtsrichtung UL (Uplink) von den Teilnehmerstationen MS zu der Basisstation BS bzw. der Abwärtsrichtung DL (Downlink) von der Basisstation BS zu den Teilnehmerstationen MS unterschieden. Durch jede Basisstation BS wird zumindest eine mit funktechnischen Resourcen versorgte Funkzelle Z gebildet. Die Teilnehmerstationen MS sind beispielsweise als mobile Funkstationen oder als ortsfeste drahtlose Netzabschlußgeräte, beispielsweise eines drahtlosen Teilnehmeranschlußsystems (Access Network), verwirklicht. Die Mobilvermittlungsstelle MSC ist weiterhin mit einem Operations- und Wartungszentrum OMC (Operation and Maintenance Center) verbunden, in dem wichtige Parameter des Systems administriert werden und das eine Mensch-Maschine-Schnittstelle darstellt.

Auf der Funkschnittstelle zwischen der Basisstation BS und den Teilnehmerstationen MS werden Signalisierungsinformationen und Nutzdaten unterschiedlicher Dienste übertragen. So werden von der Basisstation BS beispielsweise in einem spezifischen allgemeinen Organisationskanal B (BCCH - Broadcast Control Channel) allgemeine Informationen bezüglich der Organisation des Mobilfunksystems periodisch gesendet, die von den Teilnehmerstationen MS ausgewertet werden. Beispielhaft werden von der Basisstation BS in einem physikalischen Kanal ch Datenblöcke bzw. Datenpakete DP in Abwärtsrichtung zu der Teilnehmerstation MS gesendet, die deren fehlerfreien bzw. fehlerbehafteten Empfang mit einer Bestätigungs- ACK (acknowledged) bzw. Nicht-Bestätigungsnachricht NAK (not acknowledged) in Aufwärtsrichtung UL zu der Basisstation BS signalisiert. In gleicher Weise erfolgt die Übertragung der Datenblöcke von der Teilnehmerstation MS zu der Basisstation BS.

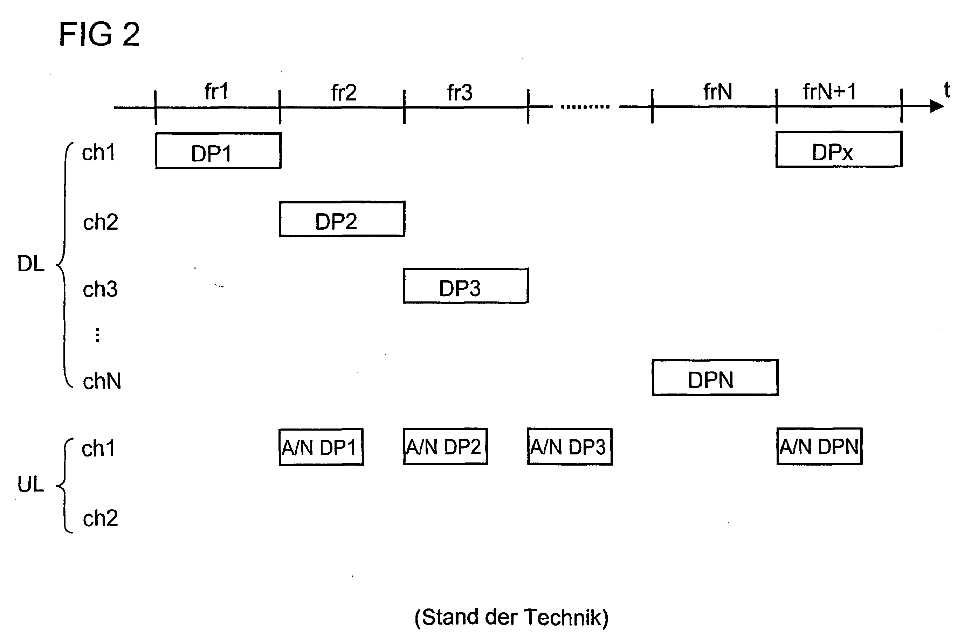

In der FIG 2 ist bezugnehmend auf die FIG 1 beispielhaft ein Ablaufdiagramm für ein in der Beschreibungseinleitung beschriebenes N-Kanal SAW HARQ-Verfahren angegeben. Das nachfolgend beschriebene Verfahren basiert auf der Annahme, daß der Kanal zur Übertragung der Datenblöcke nach einem Zeitmultiplexverfahren strukturiert ist. Die Basisstation BS sendet in einem jeweiligen Zeitrahmen fr1... Datenblöcke DP1... zu der empfangenden Teilnehmerstation MS. Während diese prüft, ob die zuvor gesendeten Datenblöcke fehlerhaft empfangen wurden und somit erneut zu übertragen sind, sendet die Basisstation BS bereits nachfolgende Datenblöcke DP2... Weiterhin erfolgt in dieser Zeit die Signalisierung von der Teilnehmerstation MS zu der Basisstation BS, ob die Datenblöcke wiederholt gesendet werden müssen oder ob neue Datenblöcke gesendet werden können, mittels einer jeweiligen Signalisierungsnachricht A/N (Acknowledged/Not Acknowledged) mit der Angabe des jeweiligen Datenblocks DP. Für eine 2-Kanal SAW HARQ, entsprechend N=2, hat der Empfänger nur die Dauer eines Zeitrahmens fr Zeit zu entscheiden und zu signalisieren, ob ein erneutes Senden des Datenblocks erforderlich ist. Abhängig von dieser Entscheidung wird in dem dritten Zeitrahmen fr3 der Datenblock nochmals oder ein neuer Datenblock gesendet.

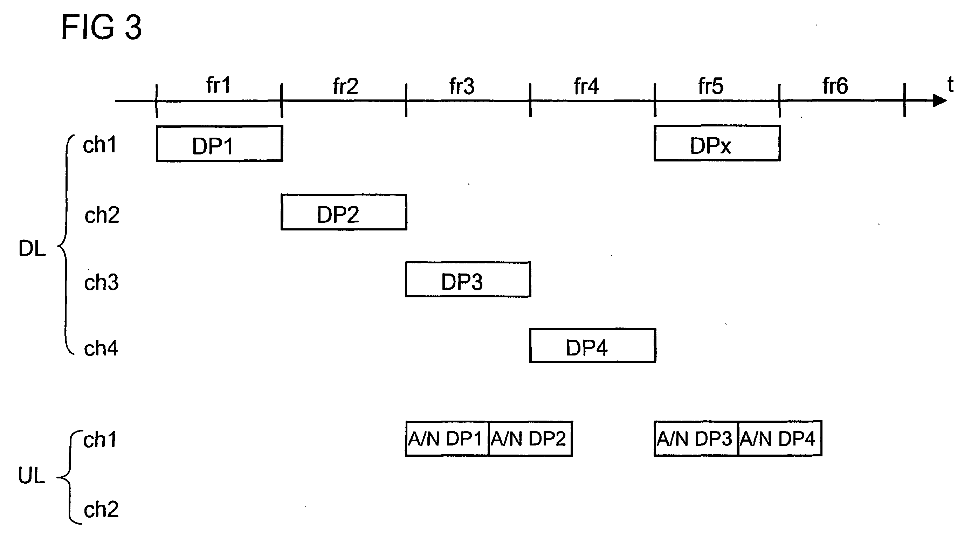

Dem beispielhaften Ablaufdiagramm der FIG 3 liegt die erfindungsgemäße Idee zugrunde, daß die Bestätigungssignalisierung in einem gemeinsamen Rückkanal in der Aufwärtsrichtung UL erfolgt. Durch eine erfindungsgemäße gemeinsame BestätigungsSignalisierung von mehreren Datenblöcken in einem Zeitrahmen wird ermöglicht, daß mehrere Teilnehmerstationen einen gemeinsamen Bestätigungskanal bzw. Rückkanal nutzen können.

Nutzt die dargestellte Variante wie bei einem beschriebenen 4-Kanal SAW HARQ-Verfahren vier Kanäle ch1...ch4, so ist zu beachten, daß die Bearbeitungszeit zur Feststellung des fehlerfreien bzw. fehlerbehafteten Empfangs der Zeit eines 2-Kanal SAW HARQ-Verfahrens entspricht. Der Datenblock DP1, der in dem Zeitrahmen fr1 gesendet wird, müßte erst in dem Zeitrahmen fr5 wiederholt werden bzw. könnte bei einer fehlerfreien Übertragung ein neuer Datenblock DPx gesendet werden. Der Datenblock DP2 würde in gleicher Weise in dem Zeitrahmen fr6 wiederholt bzw. ein neuer Datenblock gesendet werden.

Es ist demnach, wie dargestellt, hinreichend, die Bestätigungs-Signalisierung für die Datenblöcke DP1 und DP2 in dem dritten Zeitrahmen fr3 durchzuführen. Ebenfalls denkbar ist, die Signalisierung erst in dem vierten Zeitrahmen fr4 durchzuführen, um dem Empfänger eine längere Zeit zur Bearbeitung und Auswertung zur Verfügung zu stellen. Dies setzt jedoch voraus, daß der Sender dann in der Lage ist, bereits in dem nachfolgenden fünften Zeitrahmen fr5 wiederholt bzw. neu zu senden.

Der Vorteil liegt in der Einsparung von Funkresourcen. Diese liegt in dem Beispiel von 4-Kanal SAW HARQ bei bis zu 50% da die Rückmeldung immer für zwei Datenblöcke gemeinsam gesendet wird. Da jeder Empfänger von Datenblöcken einen Rückkanal benötigt, kann diese Variante die Anzahl der versorgbaren Teilnehmerstationen in einer Funkzelle erhöhen. Zusätzlich kann die durch die Rückmeldungen verursachte Interferenz reduziert werden.

Die Varianten sind nicht auf 4-Kanal SAW HARQ eingeschränkt. Für mehr als vier Kanäle würden sowohl dem Sender als auch dem Empfänger eine höhere Bearbeitungszeit zur Verfügung stehen und die Anzahl der benötigten Funkkanäle wäre noch geringer.

Wesentliche Kriterien für die Umschaltung zwischen unterschiedlichen Verfahren sind die Eigenschaften der Teilnehmerstationen sowie der Basisstation. Besonders die Fähigkeit, die Bearbeitungszeit gering zu halten, entscheidet, ob 2-Kanal SAW HARQ bzw. jene Variante des 4-Kanal SAW HARQ, welche Funkkanäle einspart, verwendet wird. Ist die Bearbeitungszeit nicht ausreichend gering, kann die 4-Kanal SAW HARQ Variante benutzt werden.

Als weiteres Kriterium für eine Umschaltung ist die Menge der zu übertragenen Daten denkbar. Sind nur wenige Daten zum Empfänger zu übertragen so kann auf die 2-Kanal SAW HARQ Variante umgeschaltet werden. Dies reduziert die Zeit zwischen dem Empfang der Datenblöcke und der Rückmeldung zum Sender in dem Rückkanal.

Abhängig von den genannten und möglichen weiteren Kriterien kann die am besten geeignete Variante des N-Kanal SAW HARQ Verfahren ausgewählt werden. Welche Variante ausgewählt wurde wird mittels einer Signalisierung mitgeteilt.

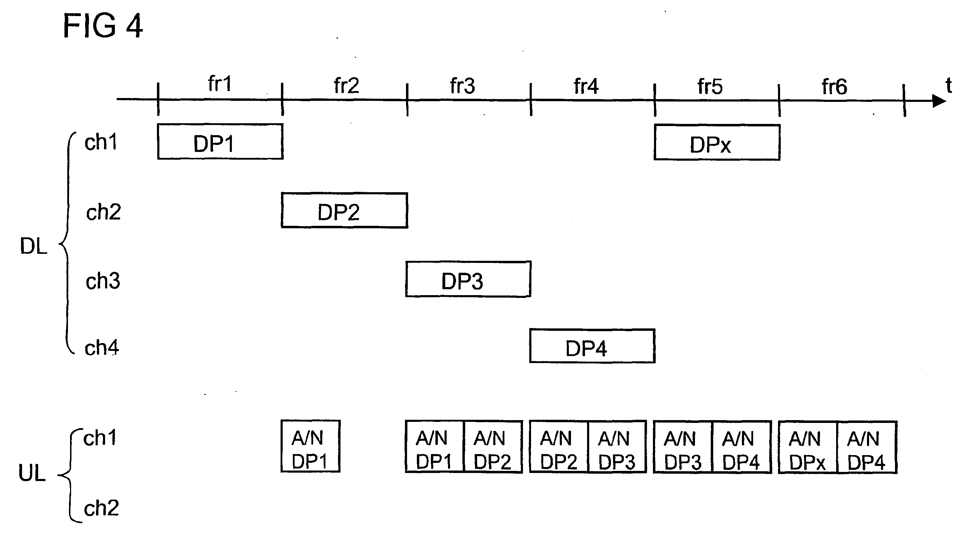

Dem beispielhaften Ablaufdiagramm der FIG 4 liegt die weitere Idee zugrunde, daß eine mehrfache Bestätigungssignalisierung in einem gemeinsamen Rückkanal in der Aufwärtsrichtung UL erfolgt. Durch diese mehrfache gemeinsame Bestätigungs-Signalisierung von mehreren Datenblöcken in jeweils zumindest zwei aufeinanderfolgenden Zeitrahmen fr wird eine größere Sicherheit des korrekten Empfangs der Bestätigungssignalisierung sichergestellt. Eine mehrfache Bestätigungssignalisierung mit einer anderen Periodizität, wie beispielsweise mit einem ungenutzten Zeitrahmen zwischen den jeweiligen Bestätigungssignalisierungen zu einem empfangenen Datenpaket, ist ebenso möglich. Wie beispielhaft in der FIG 4 dargestellt, wird der Empfang des Datenpaket DP1 sowohl in dem Zeitrahmen fr2 als auch fr3 bestätigt, währenddessen der Empfang des Datenpakets DP2 in den Zeitrahmen fr3 und fr4 bestätigt wird.

## Patentansprüche

1. Verfahren zur Übertragung von Datenblöcken (DP) zwischen Funkstationen (BS, MS) in einem Kommunikationssystem, bei dem von einer ersten Funkstation (BS, MS) Datenblöcke (DP1...) in einer Anzahl von Kanälen (DL ch1...) zu einer zweiten Funkstation (MS, BS) gesendet werden,
**dadurch gekennzeichnet, dass**
von der zweiten Funkstation (MS, BS) der Empfang von zumindest zwei Datenblöcken innerhalb eines Zeitrahmens (fr) eines von mehreren Funkstationen (MS) zeitlich getrennt genutzten Rückkanals (UL ch1) gemeinsam bestätigt wird.

2. Verfahren nach Anspruch 1, bei dem
die Datenblöcke (DP1...) jeweils in zumindest zwei Zeitrahmen (fr) bestätigt werden.

3. Verfahren nach einem vorhergehenden Anspruch, bei dem
die Übertragung der Datenblöcke (DP) entsprechend einem ARQ-Verfahren erfolgt.

4. Verfahren nach dem vorhergehenden Anspruch, bei dem
ein hybrides ARQ-Verfahren verwendet wird.

5. Verfahren nach einem vorhergehenden Anspruch, bei dem
die Kanäle zur Übertragung der Datenblöcke (DP) gemäß einem Zeitmultiplexverfahren strukturiert sind.

6. Kommunikationssystem, mit
einer ersten Funkstation (BS, MS) mit Mitteln zum Senden von Datenblöcken (DP1...) in einer Anzahl von Kanälen (DL ch1...), und
einer zweiten Funkstation (MS, BS) mit Mitteln zum Empfangen der Datenblöcke (DP1...) und zum gemeinsamen Bestätigen des Empfangs von zumindest zwei Datenblöcken innerhalb eines Zeitrahmens (fr) eines von mehreren Funkstationen (MS) zeitlich getrennt genutzten Rückkanals (UL ch1).

## Claims

1. Method for transmission of data blocks (DP) between radio stations (BS, MS) in a communication system, in which data blocks (DP1...) are sent from a first radio station (BS, MS) using a number of channels (DL ch1...) to a second radio station (MS, BS), **characterized in that**
the second radio station (MS, BS) jointly acknowledges the reception of at least two data blocks within one time frame (fr) of a back-channel (UL ch1) which is used at separate times by a plurality of radio stations (MS).

2. Method according to Claim 1, in which
the data blocks (DP1...) are each acknowledged in at least two time frames (fr).

3. Method according to one of the preceding claims, in which the data blocks (DP) are transmitted using an ARQ method.

4. Method according to the preceding claim, in which a hybrid ARQ method is used.

5. Method according to one of the preceding claims, in which the channels for transmission of the data blocks (DP) are structured using a time-division multiplexing method.

6. Communication system, having
a first radio station (BS, MS) with means for sending data blocks (DP1...) in a number of channels (DL ch1...), and
a second radio station (MS, BS) having means for receiving the data blocks (DP1...) and for joint confirmation of reception of at least two data blocks within one time frame (fr) of a back-channel (UL ch1) which is used at separate times by a plurality of radio stations (MS).

## Revendications

1. Procédé de transmission de blocs de données (DP) entre des stations radio (BS, MS) dans un système de communication, dans lequel des blocs de données (DP1 ...) sont envoyés d'une première station radio (BS, MS) vers une seconde station radio (MS, BS) dans un nombre de canaux (DL ch1...),
**caractérisé en ce que**
la réception d'au moins deux blocs de données à l'intérieur d'une trame temporelle (fr) d'un canal de retour (UL ch1) utilisé de manière séparée dans le temps par plusieurs stations radio (MS) est acquittée collectivement par la seconde station radio (MS, BS).

2. Procédé selon la revendication 1, dans lequel les blocs de données (DP1...) sont acquittés à chaque fois dans au moins deux trames temporelles (fr).

3. Procédé selon une revendication précédente, dans lequel la transmission des blocs de données (DP) s'effectue selon un procédé ARQ.

4. Procédé selon la revendication précédente, dans lequel on utilise un procédé ARQ hybride.

5. Procédé selon une revendication précédente, dans lequel les canaux de transmission des blocs de données (DP) sont structurés selon un procédé de multiplexage temporel.

6. Système de communication,
comprenant une première station radio (BS, MS) comprenant des moyens d'émission de blocs de données (DP1 ...) dans un nombre de canaux (DL ch1...) et
une seconde station radio (MS, BS) comprenant des moyens de réception des blocs de données (DP1...) et d'acquittement collectif de la réception d'au moins deux blocs de données à l'intérieur d'une trame temporelle (fr) d'un canal de retour (UL ch1) utilisé de manière séparée dans le temps par plusieurs stations radio (MS).
